# EUROPEAN PATENT APPLICATION

(11) **EP 1 810 766 A2**
(43) Date of publication of application: **25.07.2007**
(21) Application number: 07100533.4
(22) Date of filing: 15.01.2007
(51) Int. Cl.: B23B 39/00, B23B 47/28, B23B 49/02

(54) **Drill press**

(30) Priority: 18.01.2006 US 333751
(71) Applicant: Black & Decker, Inc., Newark, DE 19711 (US)
(72) Inventor: Pemberton, Donald W., Jackson, TN 38305 (US); Merhar III, Carl F., Jackson, TN 38305 (US); Boyd, P. Brent, Jackson, TN 38305 (US)
(74) Representative: Bell, Ian Stephen

(57) **Abstract**

A drill press (10) including a support post (12) and a pivot assembly (42) supported upon the support post (12) is disclosed. A table (40) is supported on the pivot assembly (42). The pivot assembly (42) is pivotable about a first substantially horizontal axis, with the table (40) pivoting about the first horizontal axis jointly with the pivot assembly (42). The table (40) also is pivotable relative to the pivot assembly (42) about a second substantially horizontal axis. The pivot assembly (42) also may be pivoted around a vertical axis defined by the post (12) and may be raised and lowered along the vertical post (12). The table (40) also may include a cavity (50) capable of receiving a consumable insert (52) that can adjust the positioning and retention of the insert (52) within the cavity (50). The drill press (10) may also includes a drill press head having an easy access cover (22), vibration suppression members (28), and a drill press chuck capable of receiving an alignment pin (31) for calibrating an optical alignment system (29).

## Description

The present invention generally relates to drill presses and in particular, to a drill press having an improved set of features.

Conventional drill presses include a vertical post and a substantially horizontally disposed workpiece support table supported between the top and bottom of the post. A head is supported at the top of the post, and a drill chuck extends downwardly from the head. The chuck holds a drill bit and is raised and lowered towards the table to thereby drill a hole in the workpiece. The drill press also includes a motor which drives the chuck.

In some instances, it is desirable to drill holes through the workpiece at non-perpendicular angles to the upper surface. One way to achieve non-perpendicular drill holes is to provide a worktable which is pivotable about a plurality of axes. For example, U.S. Patent No. 5,765,273 to Mora et. al., the entire contents of which are incorporated herein by reference, discloses a drill press having a pivotable table.

It may also be desirable to provide a workpiece support table with a cavity to support a consumable insert. The consumable insert provides further flexibility in usage of the drill press.

It may also be desirable to provide a cover to the drill press head that allows easier access to the internal components of the drill press head and reduce vibration associated with the cover during operation of the drill press.

It may also be desirable to provide an optical alignment system for assistance in aligning a work piece and means for aligning the optical alignment system.

Further areas of applicability of the present invention will become apparent from the detailed description provided hereinafter. It should be understood that the detailed description and specific examples, while indicating the preferred embodiment of the invention, are intended for the purposes of illustration only and are not intended to limit the scope of the invention

The present invention will become more fully understood from the detailed description and the accompanying drawings wherein:
FIG. 1 is a perspective view of a drill press having an improved drill press table according to the principles of the present invention;
FIG. 2 is a perspective view of the drill press head of FIG. 1;
FIG. 2A is a perspective view of the drill press head with an optical alignment system and of FIG. 1;
FIG. 3 is a perspective view showing the components of the drill press table of FIG. 1;
FIG. 4 is a partial bottom perspective view of the drill press table of FIG. 3;
FIG. 5 is a right side back elevational view of the drill press table of FIG. 3 in a forward tilted position;
FIG. 6 is a partial perspective view of a column attachment assembly forming part of the drill press of FIG. 1; and
FIG. 7 is a rear partial perspective view of a column attachment assembly forming part of the drill press of FIG. 1.

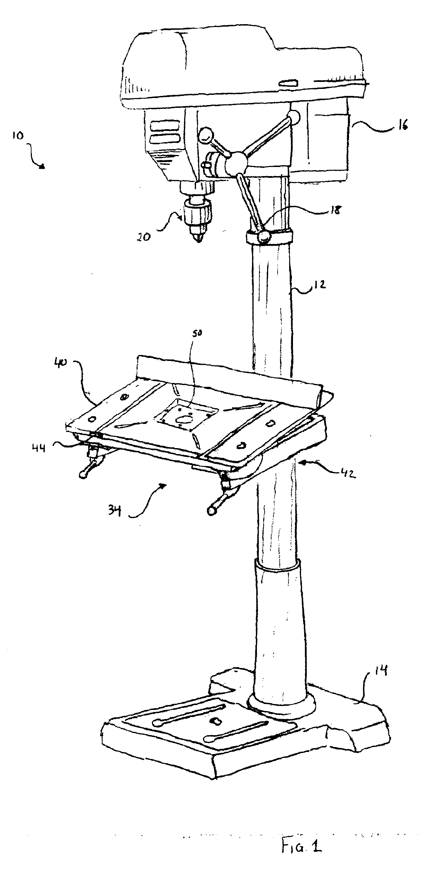

With reference to FIG. 1, a preferred embodiment of a drill press 10 is shown. Drill press 10 preferably includes main column 12, base 14 and head 16. Column 12 preferably has a hollow cylindrical shape and fits within an opening formed in base 14 and is supported by base 14 to extend substantially vertically. Head 16 includes an opening which receives column 12 and is supported thereby. A conventional chuck and rotatable handle 18 for raising or lowering the chuck 20 extend from head 14 and do not form part of the invention. Similarly, a conventional drive mechanism for the chuck 20 is disposed within head 14 and does not form part of the invention.

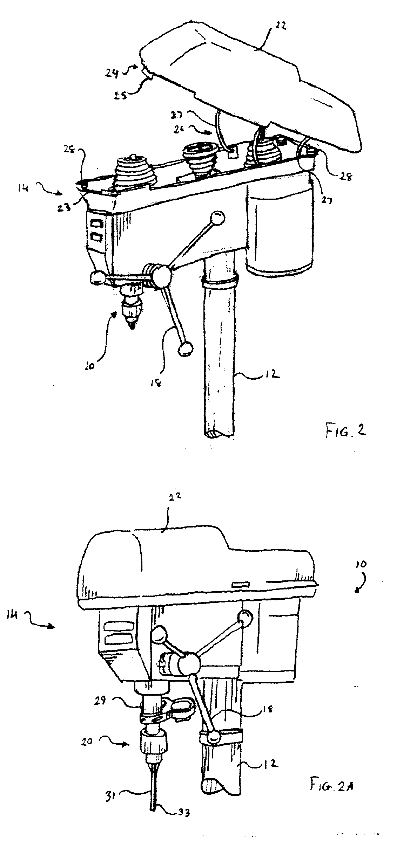

Turning to FIG. 2, a preferred embodiment of head 14 of drill press 10 can be seen. Head 14 preferably includes a cover portion 22 that may be disengaged from head 14 to provide access to the inner components located in head 14. In a preferred embodiment, cover portion 22 attaches to head 14 via a conventional latch mechanism 24 and hinge mechanism 26. The latch mechanism 24 is preferably located near the front of head 14 and the hinge mechanism 26 is preferably located towards the rear of head 14. This arrangement allows cover portion 22, when unlatched, to move in an upward and rearward direction away from head 14 allowing for greater access to the inner components located in head 14.

Latch mechanism 24 preferably comprises a flange member 25 located on one of head 14 or cover portion 22 configured and dimensioned to engage with a corresponding groove 23 on the other of head 14 or cover portion 22. In an exemplary use, in order to operate latch mechanism 24, the user depresses flange 25 disengaging flange 25 from groove 23 unlatching cover portion 22 from head 14.

Hinge mechanism 26 preferably comprises at least one guide member 27 attached at one end to head 14 and attached to cover portion 22 at the other end. The guide member 27 preferably directs cover portion 22 in an upward and rearward direction after cover portion 22 is unlatched from and moved away from head 14. The hinge mechanism 26 may also be biased to assist in the removal of cover portion 22 from head 14. In an exemplary use, once the user unlatches cover portion 22 from head 14 via latch mechanism 24, the biased hinge mechanism 26 would move cover portion 22 in an upward and rearward direction away from head 14.

With continued reference to FIG. 2, in a preferred embodiment, head 14 may also include vibration suppression members 28 to reduce the vibration and noise associated with the cover portion 22 on head 14 during use of drill press 10. Vibration suppression members 28 are located on at least cover portion 22 or head 14 substantially near an outer edge of cover portion 22 or head 14 in an orientation such that when cover portion 22 is latched onto head 14, vibration suppression members 28 are abutted on one end by cover portion 22 on the other end by head 14. This orientation allows vibration members 28 to effectively be squeezed between cover portion 22 and head 14, when cover portion 22 is latched onto head 14, thereby allowing vibration members 22 to act as a vibration absorber. Preferably, the vibration suppression members 28 are made from an elastomeric material or a similar flexible or elastic material.

Looking at FIG. 2A, in another preferred embodiment of head 14 of drill press 10, drill press head 14 may also include an optical alignment system 29 which generates at least one beam of light for alignment purposes in various applications. For example, U.S. Patent No. 6,937,336 to Garcia et. al., the entire contents of which are incorporated herein by reference, discloses a drill press having an optical alignment system that generates laser beams for alignment purposes.

In many instances, optical alignment system 29 must first be calibrated before it can be used for the various alignment purposes. One component of the calibration process is the vertical alignment of optical alignment system 29. Vertical alignment may be accomplished by placing an alignment pin 31 that has a pre-etched vertical line extend along its length in the chuck of the drill press 10. The beam of light generated from the optical alignment system 29 can then be aligned with the pre-etched vertical line. Another means to vertically align optical alignment system 29 is to place a hex stock bar (i.e. Allen Wrench) or similar bar that has edges 33 extending along its vertical length in the chuck of drill press 10. The beam of light generated from the optical alignment system 29 can then be aligned with the edge or vertices of the bar. The other components of the calibration, the cross-hairs, can be aligned using a conventional tool bit. U.S. Patent No. 6,937,336 further discusses calibration of the optical alignment system using a conventional tool bit.

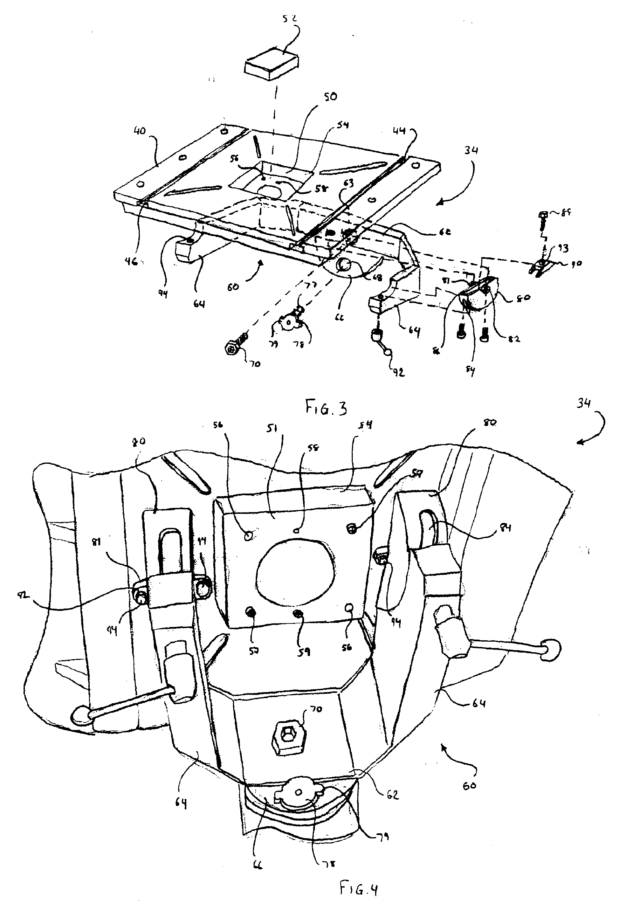

Turning back to FIG. 1 and with further reference to FIGS. 3-7, a preferred embodiment of a drill press 10 also includes cylindrical casting 30 disposed about column 12. In a preferred embodiment, cylindrical casting 30 may translate vertically along column 12 or may rotate about column 12. Cylindrical casting 30 provides an interface between table assembly 34 and column 12 of drill press 10. In a preferred embodiment, cylindrical casting 30 may include circular plate 32, which is integral with or fixedly secured to cylindrical casting 30. Circular plate 32 may also include a raised portion 33 having a central opening 36, preferably threaded, formed therethrough and a plurality of openings 38 disposed generally radially along a portion of the circumference of circular plate 32. Table assembly 34 is secured to cylindrical casting 30 and may be rotated with respect to cylindrical casting 30, as explained below.

With further reference to FIGS. 1 and 3-7, table assembly 34 includes table 40 which is secured to pivot assembly 42. As can best be seen in FIGS 1 and 3, table 40 preferably includes at least two slots 44 formed in the upper surface. Slots 44 substantially extend from front to rear of table 40 and preferably have a T-shaped cross-section formed by opposite, overhanging lips 46. T-shaped slots 44 allow for the attachment of various hardware to table 40 such as guide fences to assist in the positioning of a workpiece on the table or clamping fixtures to assist in holding a workpiece in place during use of drill press 10.

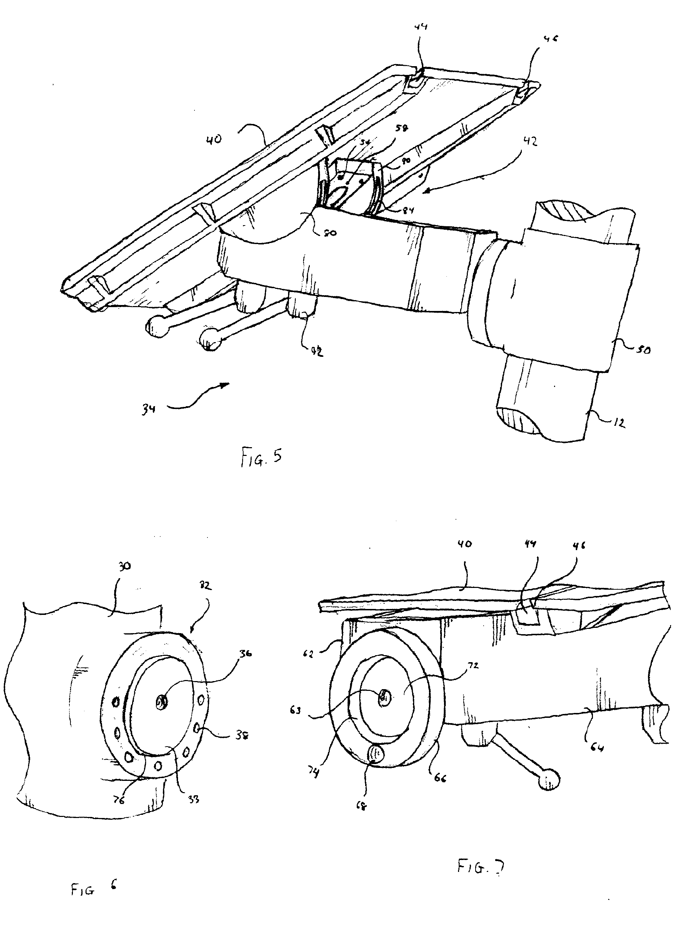

As shown in FIGS. 3 and 4, table 40, in a preferred embodiment may also include cavity 50. Although only one cavity 50 is shown on table 40, it is envisioned that table 40 can include more than one cavity 50.

In a preferred embodiment, cavity 50 is located in a substantially central location on table 40 so as to be situated under the chuck and the accessory keyed into the chuck during use of drill press 10, increasing the functionality of drill press 10. For example, cavity 50 is particularly useful in applications where the accessory keyed into the chuck of drill press 10 is required to extend nearly flush with or below the upper surface of table 40 during use. In such a use, the accessory, located above cavity 50, can be lowered so as to extend into cavity 50 allowing the user to perform the desired operation without having to worry about the accessory abutting the upper surface of table 40.

In a preferred embodiment, cavity 50 has a bottom wall 51 and four side walls 54 and may be integrally formed in table 40. Cavity 50 is preferably configured and dimensioned to receive consumable insert 52. In addition, cavity 50 preferably includes additional functionality that allows the user to adjust the depth of consumable insert 52 in cavity 50, to adjust the leveling of consumable insert 52 in cavity 50 with respect to the upper surface of table 40, and to retain consumable insert 52 in cavity.

The consumable insert 52 is a multi-function insert that further increases the functionality of the drill press. For example, insert 52 allows through drilling of a workpiece without the fear of the drill bit contacting the drill press table. In a preferred embodiment, insert 52 is either square or rectangular in shape, but can be any other shape including circular and triangular. Insert 52 may be formed from any number of materials including, but not limited to, solid wood, MDF, plywood, particleboard, fiber board, and plastic.

As can best be seen in FIG. 4, the bottom wall 51 of cavity 50 preferably has a plurality of threaded holes 56 for receiving insert leveling members 57. As mentioned above, insert leveling members 57 are used to adjust the depth that insert 52 sits in cavity 50 and to adjust the leveling of insert 52 in comparison to the upper surface of table 40 once insert 52 is placed in cavity 50. The insert leveling members 57 are preferably set screws having a head portion, a threaded shaft, and a flat or blunt end and are threaded upwardly through holes 56 into cavity 50.

In order to adjust the depth of insert 52 in cavity 50, each of the insert leveling members 57 are turned an equal amount resulting in the members entering into or exiting out of cavity 50. When the members enter into cavity 50, the flat or blunt ends of the members abut the bottom of insert 52 pushing insert 52 upwardly, away from bottom wall 51 of cavity decreasing the depth of insert 52 in cavity 50. When the members exit from cavity 50, insert 52 will abut the bottom wall 51 of cavity 50 instead of abutting the ends of the members, increasing the depth of insert 52 in cavity 50.

In order to adjust the leveling of insert 52 in cavity 50, each of insert leveling members 57 are turned a differing amount resulting in each of members 57 entering into or exiting out of cavity 50 by differing amounts. By having members 57 located at various depths in cavity 50, the bottom of insert 52 will abut the ends of members 57 at the various depths thereby changing the leveling of insert 52 in comparison to the upper surface of table 40.

In a preferred embodiment, the bottom wall 52 of cavity 50 also has at least one hole 58 for receiving an insert retaining member 59. The insert retaining member 59 is preferably used to capture and retain insert 52 in cavity 50, preventing insert 52 from accidentally falling out of cavity 50 when table 40 is in a non-horizontal position or preventing insert 52 from lifting out of cavity 50 when the drill bit bores through the workpiece and into consumable insert 52. The insert retaining member 59 is preferably a set screw having a head portion, a threaded shaft, and a sharp end and is threaded upwardly through hole 58 into cavity 50. In order to capture and retain insert 52 in cavity 50, insert retaining member 59 is turned resulting in the member entering into cavity 50. When the member enters into cavity 50, the sharp end of the member abuts and then threadingly penetrates the bottom of insert 52. Once the member threadingly engages insert 52, insert 50 will be retained in cavity 50 until the member is disengaged from insert 52. In another preferred embodiment, insert 50 may include pre-drilled holes on its bottom surface to receive insert retaining member 59.

Turning back to FIGS. 3-7, pivot assembly 42 includes wishbone table assembly support (wishbone) 60 having center arm 62, and forwardly extending side arms 64. Center arm 62 includes threaded central aperture 63 formed therethrough and circular portion 66, which includes opening 68 formed therethrough. In a preferred embodiment, locking member 70 is disposed through central aperture 63 in center arm 62. Locking member 70 preferably is a conventional bolt having a threaded shaft and a head with an internal configuration for receiving a tightening or loosening tool such as an Allen Wrench. In another preferred embodiment, locking member 70 may have a head with an external configuration for receiving a traditional wrench for tightening or loosening member 70. The threaded end of member 70 is threadably disposed through central aperture 63 and is threadably received in central opening 36 of raised portion 33 in circular plate 32. Wishbone 60 is secured to circular plate 32 by member 70.

With continued reference to FIGS. 3-7, as mentioned earlier, center arm 62 of wishbone 60 also includes circular portion 66 having an opening 68 formed therethrough. Locking pin 78 is disposed through opening 68 in circular portion 66. In a preferred embodiment, locking pin 78 has a shaft and a head portion having at least one flange member 79 for assisting the user in gripping pin 78. In another preferred embodiment, locking pin 78, instead of flange member 79, may have a head portion with an external pattern such as knurling for assisting the user in gripping locking pin 78. Locking pin 78 may also include a biasing member 77, such as a spring, disposed around the shaft of locking pin 78. In a preferred embodiment, biasing member 77 biases locking pin 78 toward and into opening 68 in circular portion 66. The shaft of locking pin 78 is disposed through opening 68 and is received in one of the openings 38 disposed radially around circular plate 32.

Turning to FIGS 6 and 7, in a preferred embodiment, the rear portion of circular portion 66 includes cavity 72 which is configured and dimensioned to receive raised portion 33 of circular plate 32. Located along the radial periphery of cavity 72 is radial wall 74. Radial wall 74 rests against and may be supported by shoulder 76 of raised portion 33. The significance of this arrangement is explained below.

In an exemplary use, to rotate table assembly 34, including table 40, about a horizontal axis and with respect to cylindrical casting 30, locking member 70 is loosened. Locking pin 78 is also pulled outwardly against the bias of biasing member 77 removing the shaft of pin 78 from opening 38. By loosening locking member 70 and pulling pin 78 outwardly, table assembly 34 can be rotated with respect to cylindrical casting 30. More specifically, circular portion 66 of center arm 62 of wishbone 60, which engages raised portion 33 of circular plate 32 of cylindrical casting 30 via cavity 72, can rotate with respect to raised portion 33. Shoulder 76 on raised portion 33 preferably supports circular portion 66 during rotation via radial wall 74 of cavity 72. In a preferred embodiment, the rotation of table assembly is about a horizontal axis that extends through locking member 70.

Although locking pin 78 and radial openings 38 may serve as means for further securing of table assembly 34 with cylindrical casting 30, locking pin 78 and radial openings 38 preferably assist in rotationally positioning table assembly 34. Radial openings 38 are positioned radially along cylindrical casting 30 at predetermined locations that correspond to varying degrees of rotation about the horizontal axis. For example, one of the radial openings 38 may correspond to a rotation of 45 degrees and another may correspond to a rotation of 90 degrees. This system allows for quick and accurate rotation and positioning of table assembly 34, including table 40, around a horizontal axis, allowing a user to easily rotate table assembly 34 to a desired degree of rotation without requiring the user to consult a scale.

In an exemplary use, after locking pin 78 is pulled outwardly, table assembly 34 is rotated. Since locking pin 78 is biased toward aperture 68, when opening 68 aligns with one of the radial openings 38, the shaft of locking pin 78 will slide through aperture 68 into one of the radial openings 38. By observing locking pin 78 sliding into one of the radial openings 38, the user will know how much table assembly 34 has been rotated. Once table assembly 34 is rotated to the desired position, locking member 70 is tightened securing table assembly 34 in the desired position.

In another exemplary use, after locking pin 78 is pulled outwardly, table assembly 34 is rotated. In this exemplary use, the user may wish to secure the assembly in a position that does not correspond with one of the radial holes 38. In this situation, the user may consult a scale located on cylindrical casing 30 or on table assembly 34 to determine the desired degree of rotation. Once table assembly 34 is rotated to the desired position, locking member 70 is tightened securing table assembly 34 in the desired position. Table assembly 34 may be secured without having locking pin 78 disposed in one of the radial openings 38.

Turning to FIGS. 3-5, pivot assembly 20 further includes trunnions 80 having a curvilinear shape. Each trunnion 80 includes upper through holes 82 formed on flanges 81, arcuate slot 84, and central channel 86. Trunnions 80 are secured for pivoting motion, on a top portion of each side arm 64 of wishbone 60, by bolt 88, shoe 90, and handle 92. In a preferred arrangement, each trunnion 80 is disposed on a top portion of each side arm 64 and disposed within central channel 86 of each trunnion 80 is shoe 90. Bolt 88 is received in preferably threaded opening 93 in each shoe 90. In a preferred embodiment, bolt 88 is dimensioned such that the shaft of bolt 88 extends through shoe 90, through arcuate slot 84 of trunnion 80, and through preferably threaded opening 94 in side arm 64. Handle 92 preferably includes a threaded opening that threadingly receives the shaft of bolt 88.

In a preferred use, depending on the direction handles 92 are rotated, trunnions 80 will either be precluded from pivoting or will be permitted to pivot. In an exemplary use, handles 92 may be tightened by rotation to force shoes 90, via bolts 88, into frictional engagement against trunnions 80 thereby securely clamping trunnions 80 against side arms 64 of wishbone 60, precluding trunnions 80 from pivoting relative to wishbone 60. Alternatively, handles 92 may be rotated to release the frictional engagement and thereby allow trunnions 80 to pivot relative to side arms 64. During such pivoting of trunnions 80, shoes 90 slide along the inner surface of trunions 80 and bolts 88, which extend through arcuate slots 84, provide positive stops when the shaft of the bolts 88 contact either end of arcuate slots 84.

Trunnions 80 are also secured to table 40 via bolts 94 disposed through holes 82 formed in flanges 81. Table 40 may be pivoted, via trunnions 80, from a generally horizontal position, about a horizontal axis parallel to the front and rear ends of the table, to a position in which the table is inclined forwardly downwardly with respect to the user, as shown in FIGS. 1 and 5. Table 40 is allowed to pivot by loosening handles 92 as described above to allow pivoting of trunnions 80, and is fixed in any desired angle by re-tightening the handles 90. In a preferred embodiment, table 40 may pivot or tilt between at least 0 degrees and 45 degrees relative to a vertical plane which extends substantially parallel to the front and rear edges of the table. Trunnions 80 may also include a scale formed along arcuate slots 84 to show the pivot angle at which table 40 has been fixed.

The description of the invention is merely exemplary in nature and, thus, variations that do not depart from the spirit of the invention are intended to be within the scope of the invention. Such variations are not to be regarded as a departure from the spirit and scope of the invention.

## Claims

1. A drill press comprising:
a vertically disposed support post;
a pivot assembly supported upon said support post; and
a table supported on said pivot assembly, wherein;
said pivot assembly is pivotable about a first substantially horizontal axis, with said table pivoting about said first horizontal axis jointly with said pivot assembly,
said pivot assembly comprises a table support having a center arm and side arms extending from said center arm, said center arm secured to said post so as to be pivotable about said first horizontal axis with said first horizontal axis intersecting said post; and
said table comprises at least one cavity, having a bottom wall and a plurality of side walls, configured and dimensioned to receive a consumable insert.

2. The drill press of claim 1, wherein said table is pivotable relative to said pivot assembly about a second substantially horizontal axis, and
wherein said pivot assembly further comprises a trunnion having a slot secured to each side arm, said trunnions pivotable relative to said side arms about said second horizontal axis, said trunnions secured to said table; and
said table being secured to said trunnions by fasteners extending through said trunnions and said slots, said table movable towards or away from said post with said fasteners sliding in said slots.

3. The drill press of claim 2, wherein, said second substantially horizontal axis is substantially perpendicular to said first substantially horizontal axis.

4. The drill press of claim 1, wherein said bottom wall of said cavity further comprises at least one opening for receiving an insert leveling member.

5. The drill press of claim 1, wherein said bottom wall of said cavity further comprises at least one opening for receiving an insert retaining member.

6. The drill press of claim 1, wherein said consumable insert is formed from at least one of the following: solid wood, MDF, plywood, particleboard, fiberboard, or plastic.

7. The drill press of claim 1, wherein the table further comprises slots extending substantially the length of the table and having a overhanging lips forming a substantially T-shaped configuration.

8. A drill press comprising:
a vertically disposed support post;
a pivot assembly supported upon said support post; and
a table supported on said pivot assembly, wherein;
said pivot assembly is pivotable about a first substantially horizontal axis, with said table pivoting about said first horizontal axis jointly with said pivot assembly,
said pivot assembly comprises:
a table support having a center arm with an opening for receiving a locking member, said center arm secured to said post so as to be pivotable about said first horizontal axis with said first horizontal axis intersecting said post;
side arms extending from said center arm; and
a circular portion connected to said center arm, said circular portion having an opening for receiving a locking pin.

9. The drill press of claim 8, further comprising a casting supported by said support post and supporting said pivot assembly, said casting having a central opening for receiving said locking member and a plurality of radially placed openings for receiving said locking pin.

10. The drill press of claim 9, wherein said radially placed openings each correspond to a predetermined degree of pivoting of said pivoting assembly around said horizontal axis and wherein when said locking pin is received in one of said holes, said pin will lock said pivoting assembly at the predetermined pivot angle about said horizontal axis.

11. The drill press of claim 9, wherein said central opening is threaded.

12. The drill press of claim 8, wherein said locking pin includes a head having at least one flange for assisting a user in gripping said locking pin.

13. The drill press of claim 8, wherein said locking pin is biased toward the circular portion.

14. The drill press of claim 8, wherein said table is pivotable relative to said pivot assembly about a second substantially horizontal axis, and
wherein said pivot assembly further comprises a trunnion having a slot secured to each side arm, said trunnions pivotable relative to said side arms about said second horizontal axis, said trunnions secured to said table; and
said table being secured to said trunnions by fasteners extending through said trunnions and said slots, said table movable towards or away from said post with said fasteners sliding in said slots.

15. The drill press of claim 14, wherein, said second substantially horizontal axis is substantially perpendicular to said first substantially horizontal axis.

16. A drill press comprising:
a vertically disposed support post;
a drill press head supported by said post;
a cover portion removeably attachable to said drill press head, said cover portion removeably attachable to said drill press head through a latch mechanism and a hinge mechanism;
a pivot assembly supported upon said support post; and
a table supported on said pivot assembly, wherein;
said pivot assembly is pivotable about a first substantially horizontal axis, with said table pivoting about said first horizontal axis jointly with said pivot assembly,
said pivot assembly comprises a table support having a center arm and side arms extending from said center arm, said center arm secured to said post so as to be pivotable about said first horizontal axis with said first horizontal axis intersecting said post;
wherein the arrangement of said latch mechanism and said hinge mechanism allow said cover portion to be detached and removed from said drill press head in an upward and rearward direction.

17. The drill press of claim 16, wherein said table is pivotable relative to said pivot assembly about a second substantially horizontal axis, and
wherein said pivot assembly further comprises a trunnion having a slot secured to each side arm, said trunnions pivotable relative to said side arms about said second horizontal axis, said trunnions secured to said table; and
said table being secured to said trunnions by fasteners extending through said trunnions and said slots, said table movable towards or away from said post with said fasteners sliding in said slots.

18. The drill press of claim 17, wherein, said second substantially horizontal axis is substantially perpendicular to said first substantially horizontal axis.

19. The drill press of claim 16, wherein said drill press head and said cover portion further comprise vibration reducing members.

20. A drill press comprising:
a vertically disposed support post;
a drill press head supported by said post having a chuck;
a pivot assembly supported upon said support post;
an optical alignment system capable of emitting light; and
a table supported on said pivot assembly, wherein;
said pivot assembly is pivotable about a first substantially horizontal axis, with said table pivoting about said first horizontal axis jointly with said pivot assembly,
said pivot assembly comprises a table support having a center arm and side arms extending from said center arm, said center arm secured to said post so as to be pivotable about said first horizontal axis with said first horizontal axis intersecting said post; and
an alignment pin capable of being received in said chuck for aligning said light emitted from said optical alignment system.

21. The drill press of claim 20, wherein said table is pivotable relative to said pivot assembly about a second substantially horizontal axis, and
wherein said pivot assembly further comprises a trunnion having a slot secured to each side arm, said trunnions pivotable relative to said side arms about said second horizontal axis, said trunnions secured to said table; and
said table being secured to said trunnions by fasteners extending through said trunnions and said slots, said table movable towards or away from said post with said fasteners sliding in said slots.

22. The drill press of claim 21, wherein, said second substantially horizontal axis is substantially perpendicular to said first substantially horizontal axis.

23. The drill press of claim 20, wherein the alignment pin is a substantially cylindrical rod having a line extending substantially along its vertical length.

24. The drill press of claim 20, wherein the alignment pin is a hexagonal rod.
